# EUROPEAN PATENT APPLICATION

(11) **EP 4 296 766 A1**
(43) Date of publication of application: **27.12.2023**
(21) Application number: 22180218.4
(22) Date of filing: 21.06.2022
(51) Int. Cl.: G02F 1/13357, G02F 1/1335

(54) **QUANTUM DOT DIFFUSER PLATE AND MANUFACTURING METHOD THEREOF**

(71) Applicant: Regency Optics-Electron Corp., Huizhou City Guangdong Province (CN)
(72) Inventor: CHENG, JIH HSIN, Huizhou City (CN); WANG, XING LI, Huizhou City (CN); LIANG, MAN YI, Huizhou City (CN); HE, XIAO LEI, Huizhou City (CN)
(74) Representative: Cabinet Chaillot

(57) **Abstract**

The present disclosure provides a quantum dot diffuser plate and manufacturing method thereof, including a quantum dot layer (10), and the upper surface and the lower surface of the quantum dot layer (10) are covered with protective layers (20). The mass percentage of each raw material of the quantum dot layer (10) is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%, quantum dots 0.01-1%, and titanium dioxide 0.2-5%. The mass percentage of each raw material of the protective layer (20) is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, and magnesium silicate minerals 0.1-6%. The quantum dot diffuser plate of above provides high brightness effect, thereby reducing the overall cost of the backlight module.

## Description

### BACKGROUND

### Technical Field

The invention relates to the field of light diffuser plates, in particular a quantum dot diffuser plate and manufacturing method thereof.

### Description of Related Art

The light diffuser plate is a material conducting through physical phenomenon of refraction, reflection and scattering that occurs when the light travels through two media with different refractive indices by chemical or physical means. By adding inorganic or organic light diffusing agents to the base of PMMA (Poly Methyl Methacrylate), PC (Polycarbonate), PS (Polystyrene), PP (polypropylene) and other substrates materials, or by artificially adjusting the light through the array arrangement of micro-features on the surface of the substrate, the light can be refracted, reflected, and scattered in different directions, thereby changing the direction of light. Under above application, sufficient dispersion of incident light is achieved so as to produce the effect of optical diffusion. Thereby, light diffuser plate is widely applied in liquid crystal display, LED lighting and imaging display devices.

At the present day, for the backlight module of TV application on the market, the backlight uniformity requires continuous improvement, therefore the level of haze of the diffuser plate is getting higher and higher. However, while achieving high haze, the light transmittance of the diffusion itself will decrease, and the brightness of the diffusion will be lost. This requires the backlight module needs to add more LED or diaphragms to improve the brightness, which eventually leads to an increase in the overall cost of the backlight module.

### SUMMARY

In some embodiments, the present invention provides a quantum dot diffuser plate and manufacturing method thereof, which have high brightness, thereby reducing the overall cost of the backlight module.

In view of above, one embodiment of the quantum dot diffuser plate and the manufacturing method thereof disclosed in the present invention is provided below:
A quantum dot diffuser plate, comprising a quantum dot layer, and the upper surface and the lower surface of the quantum dot layer are covered with a protective layer, the mass percentage of each raw material of the quantum dot layer is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%, quantum dots 0.01-1%, titanium dioxide 0.2-5%, and the mass percentage of each raw material of the protective layer is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%.

In some embodiments, the diameter of the quantum dots is in the range of 2-12 nm.

In some embodiments, the number of quantum dot layers is at least one.

In some embodiments, the plastic raw materials of the quantum dot layer and the protective layer are selected from PS, PC, PMMA or MS and combinations thereof.

In some embodiments, PS heat-resistant agent is added to both the raw materials of the quantum dot layer and the protective layer, and the mass percentage of the PS heat-resistant agent is 0.1-3%.

In some embodiments, a method of manufacturing above quantum dot diffuser plate is provided with following steps:
preparing two sets of raw materials of the same composition for the protective layer and one set of raw material for the quantum dot layer;
mixing the protective layer raw materials and the quantum dot layer raw materials evenly respectively;
adding the mixed raw material of the protective layer and mixed the raw material of the quantum dot layer into the screw extruder respectively for heating to form a molten state material; and
extruding the protective layer raw material and the quantum dot layer raw material through a die head of the screw extruder into a sheet-like manner, wherein the protective layer covers the surface of the quantum dot layer.

In some embodiments, the screw extruder includes a three-stage heating area, the temperature of the first stage of the heating is 140-220°C, the temperature of the second stage of the heating is 160-240°C, and the temperature of the third stage of the heating is 180-260°C.

In some embodiments, the die head extrusion temperature is controlled at the range of 140-220°C.

In some embodiments, the screw extruder is provided with several feeding ports, which is able to be applied with a variety of different raw materials into the screw extruder.

In some embodiments, the beneficial effect of a quantum dot diffuser plate is that the upper and lower surfaces of the quantum dot layer are covered with protective layers, and the protective layers are also composed of plastic raw materials, inorganic diffusing agents and other materials. Therefore, the protective layer has the function of light diffusion, and at the same time, it can protect the quantum dot layer, prevent water and oxygen from entering the quantum dot layer, and avoid degradation of the quantum dots in the quantum dot layer. The quantum dot layer is composed of quantum dots, titanium dioxide and other materials. By adding titanium dioxide, the titanium element in the titanium dioxide can improve the diffusion effect of the quantum dot diffuser plate. It improves the conversion of the filtered light in backlight and improves the utilization rate of the backlight. By adjusting the raw material compositions of titanium element and quantum dots, the spectrum of quantum dots in the diffuser plate can be changed, so it can match to different types of LED backlights, which greatly enhances the flexibility of the quantum dot diffuser plate. At the same time, by increasing the brightness, the overall cost of the backlight module is also reduced.

The detailed features and advantages of the present invention will be described in detail in the following embodiments, and the content is sufficient to enable anyone familiar with the relevant art to understand the technical content of the present invention and implement it accordingly, and according to the content disclosed in this specification and the scope of patent application With the drawings, anyone who is familiar with the relevant art can easily understand the purpose and advantages of the present invention.

### BRIEF DESCRIPTION OF THE DRAWINGS

Figure 1 is a schematic structural diagram of a quantum dot diffuser plate in accordance to some embodiments of the present invention;
Figure 2 is a spectrum diagram of a conventional diffuser plate in accordance to some embodiments of the present invention;
Figure 3 is a spectrum diagram of a quantum dot diffuser plate in accordance to some embodiments of the present invention;
Figure 4 is an LCD spectrum diagram in accordance to some embodiments of the present invention; and
Figure 5 is a flow chart of a method for manufacturing a quantum dot diffuser plate in accordance to some embodiments of the present invention.

### DESCRIPTION OF THE EMBODIMENTS

In order that the invention may be more fully understood, reference will now be made to the accompanying embodiments. This invention may, however, be embodied in many different forms and should not be construed as limited to the embodiments set forth herein. Rather, these embodiments are provided so that this disclosure will be thorough and complete.

Unless defined otherwise, all technical and scientific terms used herein have the same meaning as commonly understood by those skilled in the technical field of the present invention. The terms used in the specification of the present invention herein are only for the purpose of describing specific embodiments and are not intended to limit the present invention. The term "and/or" as used herein includes any and all combinations of one or more related listed items.

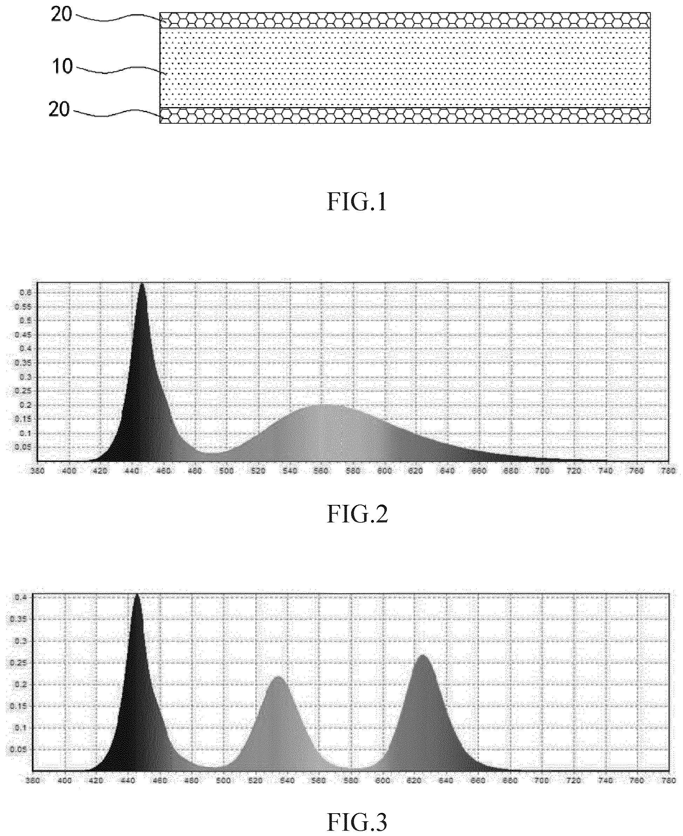

Please refer to FIG. 1, a quantum dot diffuser plate, comprises a quantum dot layer 10, the upper surface and the lower surface of the quantum dot layer 10 are covered with a protective layer 20.

The mass percentage of each raw material of the quantum dot layer 10 is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%, quantum dots 0.01-1%, and titanium dioxide 0.2-5%.

The mass percentage of each raw material of the protective layer 20 is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, and magnesium silicate minerals 0.1-6%.

The upper and lower surfaces of the quantum dot layer 10 are covered with a protective layer 20, and the protective layer 20 is also composed of plastic raw materials, inorganic diffusing agents and other materials. Therefore, the protective layer 20 has the function of light diffusion, and at the same time, it can protect the quantum dot layer 10, prevent water and oxygen from entering the quantum dot layer 10, and avoid degradation of the quantum dots in the quantum dot layer 10.

The quantum dot layer 10 is composed of quantum dots, titanium dioxide and other materials. By adding titanium dioxide, the titanium element in the titanium dioxide can improve the diffusion effect of the quantum dot diffuser plate, and the conversion of the filtered part of the light in the backlight and improves the utilization rate of the backlight. Moreover, by adjusting the raw material compositions of titanium element and quantum dots, the spectrum of quantum dots in the diffuser plate can be changed, so it can match to different types of LED backlight, which greatly enhances the flexibility of the quantum dot diffuser plate. At the same time, by increasing the brightness, the overall cost of the backlight module is also reduced.

In some embodiments, the diameter of quantum dots is in the range of 2-12nm. The use of smaller quantum dots can make the quantum dots and the titanium dioxide to be mixed more evenly, so as to better improve the diffusion effect of the quantum dot diffuser plate. The number of quantum dot layers 10 is at least one layer, in the actual production process, the number of quantum dot layers 10 can be increased according to the requirements of different specifications. Alternatively, it is able to use the quantum dot layer 10 in combination with other functional layers.

The plastic raw materials of the quantum dot layer 10 and the protective layer 20 is one or more combinations from PS, PC, PMMA or MS. The raw materials of the quantum dot layer 10 and the protective layer 20 are both added with PS heat-resistant agent, the mass percentage of PS heat-resistant agent is 0.1-3%. The addition of PS heat-resistant agent can improve the heat-resistant performance of the quantum dot diffuser plate, and to avoid deformation of the quantum dot diffuser plate due to high temperature of the LED light when it irradiates during use.

In the quantum dot diffuser plate of embodiment 1, the mass percentage of each raw material of the quantum dot layer 10 is plastic raw material 90%, stabilizer 0.5%, organosilicon 1%, inorganic diffusing agent 2%, diffusing oil 1%, styrene-butadiene copolymer 0.5%, magnesium silicate minerals 2%, quantum dots 0.5%, and titanium dioxide 2.5%.

The mass percentage of each raw material of the protective layer 20 is plastic raw material 93%, stabilizer 0.5%, organosilicon 1%, inorganic diffusing agent 2%, diffusing oil 1%, styrene-butadiene copolymer 0.5%, and Magnesium silicate minerals 2%.

The mass percentage of the existing ordinary diffuser plate is plastic raw materials 93%, stabilizer 0.5%, organic silicon 1%, inorganic diffusing agent 2%, diffusing oil 1%, styrene-butadiene copolymer 0.5%, and magnesium silicate minerals 2%.

In some embodiments, the quantum dot diffuser plate and the ordinary diffuser plate are all assembled on the LED backlight. Under the same condition of 55inch/1^{∗}24 lamps specification, turn on the power switch, preheat for 30 minutes, each plate is placed in the center above the backlight and in the fixed test area below the BEF. Under above, using the calibrated luminance meter to measure and record luminance color coordinates (x, y) and luminance LV data. The measured values are as follows in Table 1:

**Table 1: The data of five different positions of ordinary diffuser plate compared to quantum dot diffuser plate:**

| | | **Position A** | **Position B** | **Position C** | **Position D** | **Position E** | **Average** |
|---|---|---|---|---|---|---|---|
| **Ordinary Diffuser Plate** | Color position X | 0.2901 | 0.2892 | 0.2902 | 0.2903 | 0.2897 | 0.2899 |
| | Color position Y | 0.2486 | 0.2476 | 0.2477 | 0.248 | 0.2479 | 0.24796 |
| | Luminance LV | 157.7 | 155.2 | 156.4 | 158.1 | 157.6 | 157 |
| | Color analyzer | 72% | 72% | 72% | 72% | 72% | 72% |

| | | **Position a** | **Position b** | **Position c** | **Position d** | **Position e** | **Average** |
|---|---|---|---|---|---|---|---|
| **Quantum Dot Diffuser Plate** | Color position X | 0.3098 | 0.3102 | 0.3119 | 0.3122 | 0.3111 | 0.31104 |
| | Color position Y | 0.2805 | 0.2809 | 0.2817 | 0.2802 | 0.2813 | 0.28092 |
| | Luminance LV | 172.7 | 173.5 | 174.1 | 171.2 | 173.9 | 173.08 |
| | Color analyzer | 78% | 78% | 78% | 78% | 78% | 78% |

**Table 2: Percentage of improvements in five positions of quantum dot diffuser plate compared to ordinary diffuser plate:**

| | **Position a/A** | **Position b/B** | **Position c/C** | **Position d/D** | **Position e/E** | **Average** |
|---|---|---|---|---|---|---|
| Color position X | 7%↑ | 7%↑ | 7%↑ | 8%T | 7%↑ | 7%↑ |
| Color position Y | 13%↑ | 13%T | 14%↑ | 13%↑ | 13%↑ | 13%↑ |
| luminance LV | 10%↑ | 12%↑ | 11%↑ | 8%↑ | 10%↑ | 10%↑ |
| Color analyzer | 6%↑ | 6%↑ | 6%↑ | 6%↑ | 6%↑ | 6%↑ |

The five positions sampled at the quantum dot diffuser plate and the ordinary diffuser plate are all located in the same position of the plate, which are respectively the four corners corresponding to the plate and the focal positions of the four corners intersecting lines.

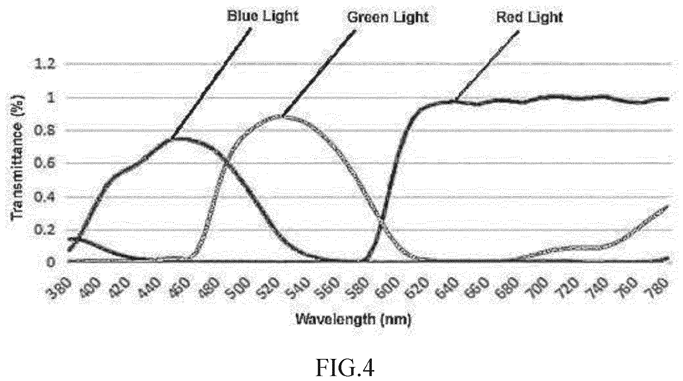

Please refer to FIG. 2, FIG. 3 and FIG. 4, FIG. 2 is the spectrum diagram of the ordinary diffuser plate, and FIG. 3 is the spectrum diagram of the quantum dot diffuser plate. According to the comparison between FIG. 2 and FIG. 3, it can be clearly seen that in FIG. 3, there are three peak waves and in the yellow region absorbed by quantum dots and converted into red light, thereby producing a better luminous effect. However, the light of the ordinary diffuser plate is absorbed in the spectrum of the yellow light region, resulting in low light utilization rate. FIG. 4 is the spectrum diagram of the quantum dot diffuser plate configured on the liquid crystal display (LCD) screen, with reference to FIG. 3, it can be seen that the quantum dot diffuser plate can have better color performance on the LCD screen.

The quantum dot diffuser plate backlight spectrum data is as follows:

The blue-light wave peak at 450nm, with half-peak width of 430~450nm, not much different compare to ordinary backlight;

The green-light wave peak at 530nm, with half-peak width of 520~550nm;

The red-light wave peak at 630nm, with half-peak width of 610~640nm.

Therefore, it can be found that the brightness LV of the quantum dot diffuser plate is increased by about 10%, and the color gamut is increased by about 6% compared to the ordinary diffuser plate.

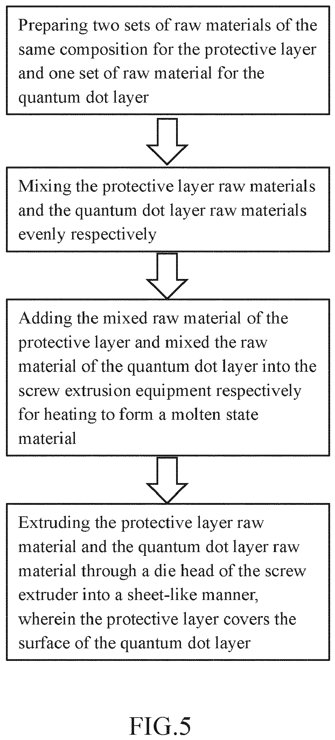

Please refer to FIG.5, in some embodiments, a method of manufacturing above quantum dot diffuser plate is provided with following steps:

a) Preparing two sets of raw materials of the same composition for the protective layer 20 and one set of raw material for the quantum dot layer 10;

b) Mixing the protective layer 20 raw materials and the quantum dot layer 10 raw materials evenly respectively;

c) Adding the mixed raw material of the protective layer 20 and mixed the raw material of the quantum dot layer 10 into a screw extruder respectively for heating to form a molten state material; and

d) Extruding the protective layer 20 raw material and the quantum dot layer 10 raw material through a die head of the screw extruder into a sheet-like manner, wherein the protective layer 20 covers the surface of the quantum dot layer 10.

In addition, using the characteristics of in-situ growth of quantum dot materials, by combined with the manufacturing method of quantum dot diffuser plate extrusion, and directly adding titanium dioxide to the raw materials, titanium dioxide and quantum dot layers 10 can be uniformly mixed in the subsequent mixing, heating and melting process of titanium dioxide. Therefore, the titanium element material in the titanium dioxide is added to the quantum dot diffuser plate 10 without adding additional processes or increasing the production cost at the same time.

Compared with the traditional process of attaching quantum dot film to the surface, the in-situ co-extrusion manufacturing method can not only achieve more uniform dispersion of quantum dot materials, but also improve the efficiency of light conversion. Moreover, this method does not add additional processes, except for the most basic raw material costs, it will not increase more production costs and a variety of optical effects can be achieved by using a single quantum dot diffuser plate.

In some embodiments, the screw extruder includes a three-stage heating area, the temperature of the first stage of the heating is at 140-220°C, the temperature of the second stage of the heating is at 160-240°C, and the temperature of the third stage of the heating is at 180-260°C.

By applying segmented heating, the raw materials of the protective layer 20 and the quantum dot layer 10 can be fully heated and mixed to form a molten state. The die head extrusion temperature is controlled at the range of 140-220°C. It ensures that the protective layer 20 and the quantum dot layer 10 are still in a molten state during the extrusion process, keeping the die head unobstructed.

In some embodiments, the screw extruder is provided with several feeding ports, which is able to be applied with a variety of different raw materials into the screw extruder. Thereby, a variety of different raw materials could be added and extruded at the same time, so as to extrusion production of multi-layer boards. For the quantum dot layers 10 added as described above, the purpose of simultaneous extrusion can be achieved by simultaneously adding a group of raw materials for the quantum dot layers 10.

As described above, a quantum dot diffuser plate and manufacturing method thereof is provided. The upper and lower surfaces of the quantum dot layer 10 are covered with protective layers 20, and the protective layers 20 are also composed of plastic raw materials, inorganic diffusing agents and other materials. Therefore, the protective layer 20 has the function of light diffusion, and at the same time, it can protect the quantum dot layer 10 for preventing water and oxygen from entering the quantum dot layer and avoiding degradation of the quantum dots in the quantum dot layer 10. The quantum dot layer 10 is composed of quantum dots, titanium dioxide and other materials. By adding titanium dioxide, the titanium element in the titanium dioxide can improve the diffusion effect of the quantum dot diffuser plate. It improves the conversion of the filtered light in backlight and improves the utilization rate of the backlight. By adjusting the raw material compositions of titanium elements and quantum dots, the spectrum of quantum dots in the diffuser plate can be changed, so it can match to different types of LED backlights, which greatly enhances the flexibility of the quantum dot diffuser plate. At the same time, by increasing the brightness, the overall cost of the backlight module is also reduced.

The above are the preferred embodiments of this application, and the scope of protection of this application is not limited accordingly. Therefore: all equivalent changes made in accordance with the structure, shape, and principle of this application shall be covered by the scope of protection of this application inside.

## Claims

1. A quantum dot diffuser plate, comprising a quantum dot layer (10), and the upper surface and the lower surface of the quantum dot layer (10) are covered with protective layers (20); wherein the mass percentage of each raw material of the quantum dot layer (10) is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%, quantum dots 0.01-1%, titanium dioxide 0.2-5%, and
the mass percentage of each raw material of the protective layer (20) is plastic raw material 90-99%, stabilizer 0.01-1%, organosilicon 0.1-3%, inorganic diffusing agent 0.1-3%, diffusing oil 0.1-3%, styrene-butadiene copolymer 0.1-2%, magnesium silicate minerals 0.1-6%.

2. The quantum dot diffuser plate of claim 1, wherein the diameter of the quantum dots is in the range of 2-12 nm.

3. The quantum dot diffuser plate of claim 1, wherein the number of the quantum dot layers (10) is at least one.

4. The quantum dot diffuser plate of claim 1, wherein the plastic raw materials of the quantum dot layer (10) and the protective layer (20) are selected from PS, PC, PMMA or MS and combinations thereof.

5. The quantum dot diffuser plate of claim 1, wherein a PS heat-resistant agent is added to the raw materials of the quantum dot layer (10) and the protective layer (20), and the mass percentage of the PS heat-resistant agent is 0.1-3%.

6. A method for manufacturing the quantum dot diffuser plate of claim 1, comprising the following steps: preparing two sets of raw materials of the same composition for the protective layer (20) and one set of raw material for the quantum dot layer (10);
mixing the protective layer (20) raw materials and the quantum dot layer (10) raw materials evenly respectively;
adding the mixed raw material of the protective layer (20) and mixed the raw material of the quantum dot layer (10) into a screw extruder respectively for heating to form a molten state material; and
extruding the protective layer (20) raw material and the quantum dot layer (10) raw material through a die head of the screw extruder into a sheet-like manner, wherein the protective layer (20) covers the surface of the quantum dot layer (10).

7. The method for manufacturing the quantum dot diffuser plate of claim 6, wherein the screw extruder includes a three-stage heating area, the temperature of the first stage of the heating is at 140-220°C, the temperature of the second stage of the heating is at 160-240°C, and the temperature of the third stage of the heating is at 180-260°C.

8. The method for manufacturing the quantum dot diffuser plate of claim 6, wherein the die head extrusion temperature is controlled at the range of 140-220°C.

9. The method for manufacturing the quantum dot diffuser plate of claim 6, wherein the screw extruder is provided with a plurality of feeding ports to be applied with a variety of different raw materials into the screw extruder.
